# EUROPEAN PATENT APPLICATION

(11) **EP 4 056 014 A1**
(43) Date of publication of application: **14.09.2022**
(21) Application number: 20883712.0
(22) Date of filing: 05.11.2020
(51) Int. Cl.: A01C 21/00, A01B 79/02

(54) **MAPPING SYSTEM FOR VARIABLE-RATE ROW-BY-ROW APPLICATION OF INPUTS**

(30) Priority: 08.11.2019 BR 102019023572
(71) Applicant: Robert Bosch Limitada, CEP: 13065-900 - Campinas - SP (BR)
(72) Inventor: DE CAMPOS DIAS MONTEIRO, Thiago, 13040-145 Campinas -SP (BR); ALCICI PELEGRINI, Lucas, 80710-000 Curitiba - PR (BR); GALAFASSI ARANTES, Lucas, 80730-380 Curitiba - PR (BR)
(74) Representative: Michalski Hüttermann & Partner Patentanwälte mbB
(86) International application number: PCT/BR2020/050453
(87) International publication number: WO 2021/087590

(57) **Abstract**

This invention refers to large scale mechanization, to the precision agriculture and to the concept of georeferenced data. More specifically, this invention refers to a mapping system for row-to-row application of inputs at variable rate, comprising tools for processing a file from prescription maps (10), tools for loading the processed data, tools for determining the geographic positioning of the processed data and for the input application rows, and tools for comparison between the geographic positioning data and the input application rows.

## Description

This invention refers to large scale mechanization, to the precision agriculture and to the concept of georeferenced data. More specifically, this invention refers to a mapping system for row-to-row application of inputs at variable rate (seeds, fertilizers, etc.).

### STATE OF ART

. In the process of input deposition in an agricultural application, it is highly relevant to reach optimal use of the worked areas.

. Within this context, optimization of the worked areas is related to the different geologic and geographic properties of the soil.

. Optimization of the worked areas is also related to a specific rate of input application according to the different geologic and geographic properties of the soil.

In a crop, it is usual to divide the area to be planted into lots for further decision on the input rate to be applied to the soil. This rate may refer to seeds (plants per hectare, plants per meter), fertilizers ((kg/hectare, kg/m²), among others.

Moreover, a same lot may present different geologic and geographic soil properties.

. So, input application must ideally fit these variations to obtain better yields for the soil, to reduce the waste of inputs and to improve the distribution thereof.

Nevertheless, in a conventional planting system, these variations are disregarded.

This results from the fact that, in a conventional system, the alteration in input application rates is a manual and long-lasting process, that requires machine stoppage. This involves regulations in the equipment or exchange of components (such as change of discs in a pneumatic seed planter).

Additionally, conventional machines either apply a single input rate to all the rows or only have divisions per sections. In other words, the existing solutions commercially available do not perform an individual input control row-to-row.

On its turn, in a smart planting system, one of the manners to optimize agricultural inputs is the use of large homogeneous productive areas.

. However, the concept of large homogeneous productive areas is based on the average need of applying inputs to a crop, leading to the use of the same fertilizer dose in a same area.

. So, only the average need is considered, while the specific needs for each portion of the soil are disregarded.

de. Likewise, there are parts of the soil in which there will be exceeding inputs where they are scarcely needed, while, in other areas, there will be a deficit of inputs where they are most needed. Consequently, the final result shall be a farming showing non-uniform productivity and increased production costs.

. Currently, the method adopted by the market to outline the different geographic/geologic characteristics of a certain region is the use of an electronic file that considers the space variability of characteristics from a certain area.

. In other words, the technique widely known is the use of prescription maps representing a set of various spots in a crop, wherein each spot represents a small portion of the crop.

A prescription map is nothing but a graphic containing each of the spots from the crop represented in a cartesian system, wherein the axis "x" is the longitude, and the axis "y" is the latitude.

. So, according to a table with different values of attributes obtained and generated to the farming, there will be just a need to scale the spots in different colors or shades to different values of attributes.

Said prescription maps are described by the documents BR9814056 and BR112013017305.

Nevertheless, due to the amount and variability of the data obtained and generated, the generation and reading of a prescription map are subject to limitations and errors, so that a preliminary treatment is always required to the analysis and decision-making process.

. It is also observed that the complexity levels of prescription maps may vary not only according to the amount and kind of attributes obtained and generated in field, but also to the tools for the analysis of data relating to said attributes obtained and generated in field.

. In view of the above, one emphasizes that, in the smart planting, the existing techniques to outline different geographic/geologic characteristics of a certain region are not suitable to prescription maps showing higher complexity levels.

Of note, the higher shall be the space variability of the soil/planting, either by virtue of its geographic/geologic characteristics and/or by virtue of the number of attributes obtained and generated in a land, the higher shall be the potential economic return to the producer, in addition to resulting into lower environmental impact.

### OBJECTIVES OF THE INVENTION

. This invention intends to provide a system that is able to deal with a higher number of geographic/geologic features of a certain region associated with a higher number of attributes obtained and generated in said region.

. Another objective of this invention is to provide a mapping system to a row-to-row application of inputs at variable rates with a higher level of details.

. Additionally, this invention intends to treat and analyze complex data for decision-making process.

### BRIEF DESCRIPTION OF THE INVENTION

To circumvent the inconveniences from the state of art, this invention refers to a mapping system to row-to-row application of variable rates of inputs, comprising:
, data processing tools to be used in a prescription map file, comprising at least a polygon the perimeter of which is limited by geographic coordinates associated to, at least, one attribute,
, tools to download the processed data in a memory comprising a structure of, at least, a list of geographic coordinates and an input application rate to the at least polygon,
tools to determine the geographic positioning of at least a spot of input application in an input application row comprised into an area of the prescription map; and
, tools for comparison between the list of geographic coordinates of the at least one polygon and the geographic positioning of the at least input application spot,
wherein the value of the input application rate of the at least one polygon is attributed to the input application row at the intersection between the list of geographic coordinates of the at least one polygon and the geographic positioning of the at least input application spot

So, as explained in further details below, the mapping system for row-to-row application of inputs at variable rate disclosed herein uses the input application at variable rates and at the precise value of inputs for a certain region defined according to the properties of the prescription maps.

### BRIEF DESCRIPTION OF THE FIGURES

FIGURE 1 - Illustrative scheme of a prescription map for application of a variable rate of inputs.
FIGURE 2 - Illustrative scheme of a prescription map for application of a variable rate of inputs with higher levels of details.
FIGURE 3 - Illustrative scheme of a structure of data processed and downloaded in the mapping system for row-to-row application of the variable rate of inputs according to this invention.

### DETAILED DESCRIPTION OF THE FIGURES

Firstly, one emphasizes that, in the context of the precision agriculture and of a guarantee of better yields for the soil, this invention refers to a system that considers the space variability of the land in all its aspects: soil composition - physical and chemical characteristics, compaction, fertility, plant population, kind of input, harvest data or climate conditions, weed and plague infestation and diseases.

More specifically, this invention refers to a system that is able to associate the different values of attributes 12 obtained and generated in field with geographic/geologic characteristics of the land to the input application at variable rates and in the precise value of inputs for a certain defined region.

As noted in the figures 1 and 2 of this application, the mapping system for row-to-row application of inputs at variable rate according to this invention intends to deal with prescription maps with higher complexity levels. In other words, it intends to deal with prescription maps comprising polygons formed by several coordinates and a higher level of details (figure 2).

So, the mapping system for row-to-row application of inputs at variable rate herein comprises tools for processing and loading data from an electronic file.

The processing tools deal with data related to a map formed by a plurality of polygons, with a perimeter 11 limited by geographic coordinates associated to the plurality of attributes 12 inherent to this region.

Of note, the processing tools comprise an embedded computer, such as a PDA, a netbook or UPMC. Any tools that are able to process an algorithm fitting the complexity level of the mapping system for row-to-row application of inputs at variable rate are applicable to the invention.

. As to the loading tools, they work together with a memory, so that the processed data extracted from the electronic file are loaded either through USB port or wireless, in a specific structure 13.

As seen in the figure 3, the structure 13 corresponds to the association of a planting polygon with a list of geographic coordinates 14 with perimeter 11, and an input application rate 15.

More specifically, the mapping system for row-to-row application of inputs at variable rate according to this invention operates an algorithm that calculates the list of geographic coordinates 14 and the input application rate 15 for each polygon, according to a plurality of attributes except an attribute 12, and to the perimeter 11 as limited by the geographic coordinates of the at least polygon.

The plurality of attributes 12 comprises a group formed by soil composition, content of nutrients in the soil, plant population, kind of input, harvest data or climate conditions.

. More specifically, the mapping system for row-to-row application of inputs at variable rate herein loads and interprets the file according to a technical specification, thus allowing the map regions to be defined by "polygons" and formed by a list of geographic coordinates 14 that define their respective perimeters 11. These polygons may vary according to the number of coordinates. The higher shall be the number of coordinates of a polygon, the higher shall be the level of details of a region.

Preferably, the electronic file is a Shapefile-type file.

A Shapefile-type file is a format to store vector data to store the position, form, and attribute 12s of geographic features. It is stored as a set of related files and contains a feature class. Shapefiles often contain large features with many related data.

. Additionally, the mapping system for row-to-row application of inputs at variable rate herein comprises tools to determine the geographic positioning of an input application spot in an input application row, comprised within an area of the prescription map 10.

More specifically, the tools to determine the geographic positioning comprise a GPS device and a vehicle dynamics algorithm.

More specifically, the determination of the geographic positioning of each input application spot requires the purchase of the geographic positioning of input spot. This is performed through a GPS antenna.

. Preferably, the GPS antenna is positioned above a tractor, an existing device often used for autopilot systems.

Nevertheless, the purchase of geographic positioning of the input spot contains information of an only reference spot (the antenna itself), and the input application spots must be known from said spot.

. So, one applies a vehicle dynamics algorithm that simulates the movement of a machine (tractor and agricultural implement) to determine the geographic positioning of each input application spot.

. The vehicle dynamics algorithm refers to a navigation method wherein a route of a transport mean is divided into a plurality of polygonal forms through a processing tool that comprises dividing the route into a plurality of adjacent polygonal forms, wherein each polygonal form comprises a perimeter 11 containing a sequence of adjacent spots.

More specifically, one determines the position of an element in relation to a certain route of a transport mean, that is applied to perform a real-time checking as to whether a certain route or trajectory R is being followed.

So, in planting systems that require real-time checking of the trajectory followed by the agricultural implement to identify the input application spot and/or to avoid overlapping of planted areas, the vehicle algorithm of the mapping system for row-to-row application of inputs at variable rate herein operates by checking if a certain element (that can be any reference spot: a real object, such as a seed already planted in a certain land, or a virtual spot) is circumscribed to the route.

In this case, the route R can be recorded through a GPS or through any other navigation unit that uses any other referential geo-location form.

Moreover, an element P means any reference spot, either virtual or real. An example of a real reference spot can be a seed planted in a certain soil position at some land used in the vegetable planting and culture.

So, the vehicle dynamics algorithm of this invention is an easy and very accurate form to avoid the generation of a "false positive" result. Moreover, this is a very advantageous technique, as it does not require an extremely robust, large and expensive processing unit.

Additionally, the mapping system for row-to-row application of inputs at variable rate herein comprises tools for comparison between the list of geographic coordinates 14 of at least one polygon and the geographic positioning of at least an input application spot.

. More specifically, the comparison tools refer to an algorithm to the analysis of data loaded in the memory, with data generated by the tools for determination of the geographic positioning.

More specifically, to determine if a geographic coordinate (latitude or longitude) is located inside a region defined by the prescription map 10, the mapping system for row-to-row application of inputs at variable rate herein uses a comparison between the vortices of polygons stored inside the memory and the physical position of each input application row

So, if an input application row is inside the area of a polygon identified by the prescription map 10, the application rate of inputs in the row corresponds to the value of the input application rate 15 of the polygon.

In other words, the value of input application rate 15 of at least one polygon is attributed to the input application row at the intersection between the list of geographic coordinates 14 of this polygon and the geographic positioning of at least one input application spot in a specific region of the crop.

. Advantageously, the determination of said region through the algorithms contemplated by this invention considers a space variability of the land in all its aspects: soil composition - physical and chemical characteristics, compaction, fertility, plant population, kind of input, harvest data or climate conditions, weed and plague infestation, and diseases.

. Therefore, one observes, in this invention, that the intersection between the list of geographic coordinates 14 of a polygon and the geographic positioning of input application spots advantageously allows considering a set of geographic/geologic characteristics and of attributes 12 of the land for the decision-making process of the algorithms.

Therefore, the mapping system for row-to-row application of inputs at variable rate herein advantageously allows the analysis of a higher number of data, thus resulting into more consistent information and more accurate decision making as to the space variability. It still provides a correct distribution of inputs to a planting region with different geographic/geologic characteristics, thus improving the efficiency of farming.

The mapping system for row-to-row application of inputs at variable rate according to this invention still comprises tools for row-to-row application of inputs. More specifically, the application tools comprise a controller for actioning one of the following: actuator of pneumatic cylinders, hydraulic cylinders, hydraulic engines, pneumatic engines, electric engines.

. An individual control (row-to-row) of variable rates for input application requires the use of actuators fixed at each row of the machine. These actuators must be adjusted to apply the relevant input.

Preferably, the tools to a row-to-row input application comprise a set of electric engines fixed to seed dispensers to distribute the seeds according to the properties from the prescription maps.

Therefore, this invention solves all the inconveniences shown by inaccurate prior art techniques, thus contributing to improve the accuracy of smart planting practices, as well as of the decisions relating to a better management of productive units.

## Claims

1. Mapping system for row-to-row application of inputs at variable rate, **characterized by** the fact that it comprises:
data processing tools to be used in a file of a prescription map (10) comprising at least a polygon the perimeter of which (11) is limited by geographic coordinates associated to at least an attribute (12),
tools for loading processed data in a memory comprising a structure (13) of at least one list of geographic coordinates (14) and an input application rate (15) to the at least one polygon,
tools to determine the geographic positioning of at least one input application spot in an input application row comprised within an area of the prescription map (10), and
tools for comparison between the list of geographic coordinates (14) of the at least polygon and the geographic positioning of at least one input application spot,
wherein the input application rate (15) is attributed to the input application row at the intersection between the geographic coordinates of the list of geographic coordinates (14) and the at least input application spot, and
wherein a vehicle dynamics algorithm determines if a trajectory R is being followed and if the element P is circumscribed to the trajectory R.

2. System according to the claim 1, **characterized by** the fact that the processing tools comprise one of the following: PDAs, net-books or embedded UPMCs.

3. System according to the claim 1, **characterized by** the fact that the prescription map file (10) comprises a Shapefile file.

4. . System according to the claim 1, **characterized by** the fact that the loading tools comprise one of the following: USB port or wireless.

5. System according to the claim 1, **characterized by** the fact that the list of geographic coordinates (14) and the input application rate (15) are calculated according to at least one attribute (12) and within the perimeter (11) as limited by the geographic coordinates of the at least polygon.

6. . System according to the claim 5, **characterized by** the fact that the at least one attribute (12) comprises one of the following: soil composition, content of soil nutrients, plant population, kind of input, harvest data or climate conditions.

7. System according to the claim 1, **characterized by** the fact that the tools to determine the geographic positioning comprise a GPS device.

8. System according to the claim 1, **characterized by** the fact that the comparison tools comprise an algorithm to compare the data loaded in the memory and the data generated by the tools for determination of the geographic positioning.

9. . System according to the claim 1, **characterized by** the fact that it still comprises tools for row-to-row input application.

10. System according to the claim 9, **characterized by** the fact that the application tools comprise a controller for actioning one of the following: actuator of pneumatic cylinders, hydraulic cylinders hydraulic engines, pneumatic engines, electric engines.
